## Europäisches Patentamt
## European Patent Office
## Office européen des brevets

(19)

(11) Veröffentlichungsnummer: **0 230 429**
**B1**

(12) # EUROPÄISCHE PATENTSCHRIFT

(45) Veröffentlichungstag der Patentschrift:
**25.10.89**

(51) Int. Cl.⁴: **B 28 D 1/30,** B 28 D 1/08,
B 23 Q 23/00, B 23 D 57/00

(21) Anmeldenummer: **86903106.8**

(22) Anmeldetag: **20.06.86**

(86) Internationale Anmeldenummer:
**PCT/AT 86/00046**

(87) Internationale Veröffentlichungsnummer:
**WO 86/07560 (31.12.86 Gazette 86/28)**

(54) STEINSÄGE.

(30) Priorität: **20.06.85 AT 1831/85**
**20.06.85 AT 1832/85**

(43) Veröffentlichungstag der Anmeldung:
**05.08.87 Patentblatt 87/32**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**EP-A-0 048 240**
**DE-A-2 803 357**
**US-A-2 674 238**
**US-A-2 866 448**
**US-A-3 395 595**
**US-A-4 016 856**
**US-A-4 067 312**

(73) Patentinhaber: **Mayer, Wolfgang,**
**Nonntalerhauptstrasse 102, A-5020 Salzburg (AT)**

(72) Erfinder: **Mayer, Wolfgang, Nonntalerhauptstrasse**
**102, A-5020 Salzburg (AT)**

(74) Vertreter: **Hübscher, Gerhard, Dipl.- Ing.,**
**Patentanwälte Dipl.- Ing. Gerhard Hübscher**
**Dipl.- Ing. Helmut Hübscher Dipl.- Ing. Heiner**
**Hübscher Spittelwiese 7, A-4020 Linz (AT)**

EP 0 230 429 B1

LIBER, STOCKHOLM 1989

## Beschreibung

Die Erfindung bezieht sich auf eine Steinsäge mit einem umlaufenden Sägeseil, das beidseits wenigstens einer Sägestrecke durch Stützrollen gegen den Schnittdruck abgestützt ist, mit einem Vorschubantrieb und mit in Abhängigkeit von der jeweiligen Vorschubrichtung um die Sägeseilachse schwenkverstellbaren Gehäusen für die Lagerung der Stützrollen, die quer zu ihrer Achse und zur Sägeseilachse verstellbar in den Gehäusen gehalten sind.

Durch die Schwenkverstellung der Stützrollen um die Achse des Sägeseiles in Abhängigkeit von der jeweiligen Vorschubrichtung wird bei bekannten Steinsägen (AT-B-371 761) erreicht, daß die durch die auftretenden Schnittdrücke wirksam werdenden Kräfte auf die Stützrollen senkrecht zu deren Drehachse stehen, so daß die Seitenwände der Seilführungsnut der Stützrollen vor größeren Belastungen bewahrt werden. Dadurch wird ein verringerter Verschleiß der Seilführungsnuten und davon abhängig eine genauere Seilführung auch nach grösseren Standzeiten sichergestellt.

Eine solche Seilführung stellt zwar eine notwendige Voraussetzung für ein genaues Kontursägen dar, doch ist diese Maßnahme hiefür nicht hinreichend. Die Drehachse der Gehäuse für die Stützrollenlagerung muß nämlich für eine genaue Schnittführung mit der Sägeseilachse zusammenfallen. Mit dem unvermeidbaren Verschleiß der Seilführungsnuten ergibt sich eine Verlagerung der Achse des Sägeseiles gegenüber der konstruktiv festgelegten Drehachse der Gehäuse, so daß beispielsweise Kurven mit kleinem Krümmungsradius nicht mehr ausreichend genau ausgeschnitten werden können.

Um die Lage der Seilachse gegenüber einem zylindrischen Gehäuse einstellen zu können, das eine Stützrolle für das Sägeseil trägt und in Abhängigkeit von der Vorschubrichtung gegenüber dem Sägeseil um seine Achse gedreht werden kann, ist es außerdem bei einer Steinsäge bekannt (US-A-2 866 448), die Stützrolle innerhalb eines Langloches eines Lagerbockes des zylindrischen Gehäuses radial zur Gehäuseachse zu verstellen. Da diese Verstellung von Hand aus bei Stillstand der Steinsäge erfolgen muß, ist eine fortlaufende Berücksichtigung einer Verlagerung der Seilachse nicht möglich, zumal ja auch der Verschleiß der Stützrolle nicht erfaßt werden kann.

Der Erfindung liegt somit die Aufgabe zugrunde, diesen grundsätzlichen Mangel bekannter Steinsägen der gattungsgemäßen Art zu vermeiden und eine Seilführung sicherzustellen, die trotz der unvermeidbaren Verschleißerscheinungen ein genaues Kontursägen erlaubt.

Die Erfindung löst die gestellte Aufgabe dadurch, daß die Stützrollen mittels eines Stelltriebes in Abhängigkeit vom radialen Verschleiß der Stützrollen zur Sägeseilachse hin verlagerbar sind und daß wenigstens einer Stützrolle ein gehäusefester Abstandsgeber für das Sägeseil zugeordnet ist, der eine Steuereinrichtung für den Stelltrieb zur Stützrollenverlagerung beaufschlagt.

Durch das Nachstellen der Stützrollen im Ausmaß des jeweiligen Verschleißes der Seilführungsnuten über den hiefür vorgesehenen Stelltrieb wird in einfacher Weise eine Verlagerung der Seilachse aus der Drehachse der Gehäuse vermieden und sichergestellt, daß bei einer Schwenkverstellung der Gehäuse das Sägeseil seine jeweilige Lage beibehält. Um diese Bedingungen für eine genaue Schnittführung erfüllen zu können, ist es jedoch notwendig, den jeweiligen Verschleiß der Stützrollen zu erfassen, was in einfacher Weise durch einen gehäusefesten Abstandsgeber für das Sägeseil erreicht werden kann, der der Stützrolle zugeordnet wird, weil sich der die Schnittgenauigkeit beeinträchtigende Verschleiß der Stützrollen ja in einer Verlagerung des Sägeseils gegenüber dem Gehäuse bemerkbar macht. Wird durch den Abstandsgeber eine Verlagerung des Sägeseiles angezeigt, so wird der Stelltrieb im Sinne eines Ausgleichens dieser Verlagerung angesteuert und der gewünschte geometrische Sägeseilverlauf auch während des Betriebes der Steinsäge sichergestellt.

Voraussetzung hiefür ist allerdings, daß das Sägeseil nicht von den Stützrollen abheben kann. Kann dies durch die Sägeseilführung nicht in jedem Fall gewährleistet werden, so können die Gehäuse auf der den Stützrollen bezüglich der Sägeseilachse gegenüberliegenden Seite zusätzlich federbelastete Andrückrollen für das Sägeseil aufweisen, die gegenüber den sägestreckenseitigen Stützrollen von der Sägestrecke weg in Richtung der Sägeseilachse versetzt angeordnet sind. Mit Hilfe der federbelasteten Andrückrollen wird unabhängig von Durchmesserschwankungen des Sägeseiles und unabhängig von einem auftretenden Verschleiß der Stützrollen und der Andrückrollen ein sattes Anliegen des Sägeseiles an den Stützrollen erreicht, so daß beispielsweise außerhalb der Sägestrecke angeregte Seilschwingungen nicht auf den Sägestreckenbereich durchgreifen können. Da außerdem die Andrückrolle gegenüber der sägestreckenseitigen Stützrolle von der Sägestrecke weg in Richtung der Seilachse versetzt angeordnet ist, bestimmt die sägestreckenseitige Stützrolle und nicht die federbelastete Andrückrolle den Sägeseilverlauf im Bereich der Sägestrecke. Bei der federnden Abstützung der Andrückrollen ist lediglich darauf Bedacht zu nehmen, daß die Eigenfrequenz des durch die federbelasteten Andrückrollen gegebenen Schwingungssystems nicht im Bereich der Schwingungsfrequenzen des Sägeseiles liegt. Die federnde Abdrückrolle bringt aber nicht nur eine schwingungsfreie Seilführung mit sich, sondern bewirkt auch, daß das mit einer vorgegebenen Kraft an die Stützrollen angedrückte Sägeseil die Stützrollen schlupffrei mitnimmt, so daß der Verschleiß im Bereich der Seilführungsnut auf ein Minimum beschränkt werden kann.

Die durch das Nachstellen der Stützrollen vom auftretenden Verschleiß der Seilführungsnuten und des Sägeseiles unberührte Festlegung des geometrischen Seilverlaufes erlaubt es außerdem, die Sägeseilsablenkung im Bereich der Sägestrecke für die Steuerung des Vorschubantriebes auszunützen, wie dies für einen ebenen Schnitt bekannt ist (US-A- 4 067 312). Während eine verschleißbedingte Verlagerung des Sägeseiles bei einem ebenen Schnitt sich auf die Schnittführung nicht auswirken kann, macht sich diese Verlagerung bei einem Kurvenschneiden sehr unangenehm bemerkbar, so daß die von Verschleißerscheinungen unabhängige Seilführung für eine solche Vorschubsteuerung notwendig ist. Darüber hinaus genügt es nicht, einen Wächter für eine maximale zulässige Ablenkung des Sägeseiles vorzusehen, wie dies beim Stand der Technik der Fall ist, weil beispielsweise beim Ausschneiden eines Eckes nur eine gegenüber einem geraden Schnittverlauf kleinere Auslenkung zugelassen werden darf, um eine gleiche Schnittqualität über den gesamten Schnittverlauf sicherzustellen. Zur Berücksichtigung dieser Umstände kann zumindest ein Gehäuse einen einer Stützrolle sägestreckenseitig vorgelagerten Geber für die ständige Erfassung der jeweiligen Seilablenkung tragen, wobei der Vorschubantrieb über eine mit dem Geber verbundene Regeleinrichtung kontinuierlich in Abhängigkeit vom Schnittverlauf steuerbar ist. Der Vorschubantrieb kann somit nicht nur im Sinne einer Konstanthaltung einer vorgegebenen Sägeseilablenkung im Bereich eines bestimmten Abschnittes des Schnittverlaufes, sondern auch im Sinne einer unterschiedlichen Sägeseilablenkung gesteuert werden, wenn dies beispielsweise der Übergang zwischen zwei unterschiedlichen Krümmungsabschnitten verlangt. Mit Hilfe eines Rechners können diese Änderungen programmbedingt vorgegeben werden.

Da zur Erfassung des Verschleißes der Stützrollen lediglich die dadurch bedingte Seilverlagerung gegenüber dem Gehäuse über den Abstandsgeber bestimmt werden muß, kann der Abstandsgeber unterschiedlich angebracht werden. Besonders vorteilhafte Bedingungen ergeben sich allerdings, wenn der gehäusefeste Abstandsgeber für das Sägeseil auf der bezüglich der Sägeseilachse gegenüberliegenden Seite der zugeordneten Stützrolle vorgesehen ist, weil in diesem Fall die Abstandsrichtung mit der für die Schnittgenauigkeit maßgebenden Richtung der Seilverlagerung übereinstimmt.

Zur Verstellung der Stützrollen quer zu ihrer Achse und zur Sägeseilachse können an sich sehr unterschiedliche Konstruktionen eingesetzt werden. Besonders vorteilhafte Verhältnisse werden erreicht, wenn die Stützrollen auf verstellbaren Exzenterachsen gelagert sind, weil keine Gleitführung für die Stützrollenlager notwendig wird. Zum Nachstellen der Stützrollen brauchen ja lediglich die Exzenterachsen verdreht zu werden, was mit Hilfe eines mit der Exzenterachse verbundenen Hebelarmes, an dem der Stelltrieb angreift, einfach durchgeführt werden kann.

Bei der Anordnung von zwei Sägestrecken hintereinander ist es erforderlich, das Sägeseil zwischen den beiden Sägestrecken durch je eine sägestreckenseitige Stützrolle abzustützen. Kann in einem solchen Fall davon ausgegangen werden, daß die Stützrollen zwischen den beiden Sägestrecken einem gleichen Verschleiß unterliegen, so können diese Stützrollen gemeinsam nachgestellt werden. Zu diesem Zweck können die verstellbaren Exzenterachsen dieser Stützrollen durch je einen Kurbelarm und eine Koppel zwischen den Kurbelarmen antriebsverbunden sein. Der Stelltrieb braucht daher lediglich an einer der beiden Exzenterachsen anzugreifen. Ist mit einem stark unterschiedlichen Verschleiß der beiden Stützrollen zu rechnen, so müßte für jede der Stützrollen ein Abstandsgeber für das Sägeseil und eine mit dem Abstandsgeber verbundene Steuereinrichtung vorgesehen werden. Im allgemeinen genügt jedoch eine längenverstellbare Koppel zwischen den beiden Kurbelarmen, um einen unterschiedlichen Verschleiß im Bereich der beiden Stützrollen berücksichtigen zu können.

Werden die Stützrollen für zwei hintereinanderliegende Sägestrecken in einem gemeinsamen Gehäuse untergebracht, so kann zwischen diesen beiden Stützrollen eine gemeinsame federbelastete Andrückrolle vorgesehen sein, die mit den beiden Stützrollen zusammenwirkt. Eine solche Anordnung ergibt eine sehr gedrängte Bauweise und stellt eine besonders wirksame Sperre für Seilschwingungen sicher. Zwischen je zwei Stützrollen angeordnete, federbelastete Andrückrollen können daher auch vorteilhaft bei einer einzigen Sägestrecke oder bei außenliegenden Sägestrecken eingesetzt werden.

Damit die Vorteile von Drehlagern auch bei der nachgiebigen Lagerung der federbelasteten Andrückrollen ausgenützt werden können, können die Andrückrollen jeweils auf einem Schwenkhebel gelagert sein, der eine zu den Andrückrollen parallele Drehachse aufweist und durch eine Feder gegenüber dem Gehäuse abgestützt ist. Das Vorsehen der Andrückrollen auf einem Schwenkhebel hat gegenüber einer Verschiebung der Andrückrollen außerdem den Vorteil, daß über die Hebellänge ein günstiges Übersetzungsverhältnis der Federkraft und des Federweges erzielt werden kann.

In der Zeichnung ist der Erfindungsgegenstand beispielsweise dargestellt. Es zeigen:

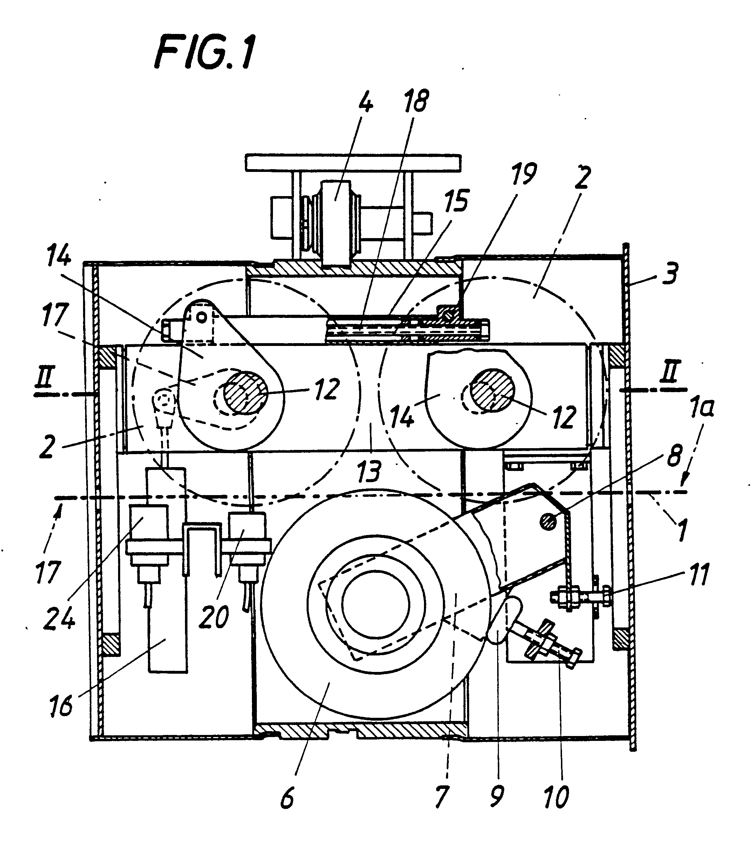

Fig. 1 eine Seilabstützung für eine erfindungsgemäße Steinsäge in einem vereinfachten Längsschnitt,

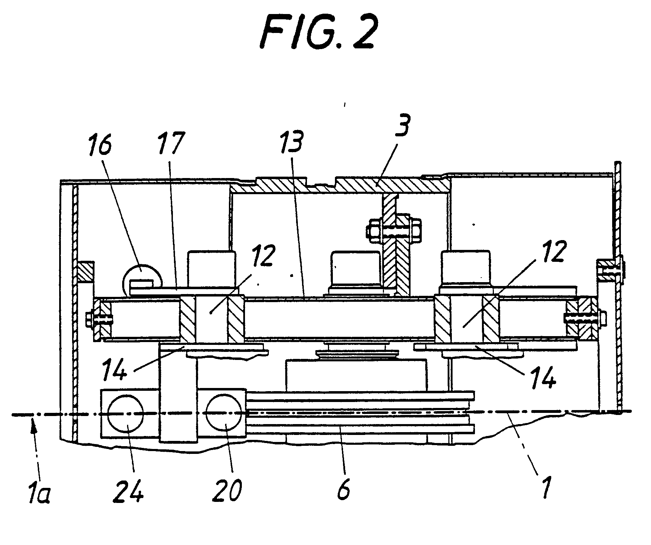

Fig. 2 diese Seilabstützung in einem Teilschnitt nach der Linie II-II der Fig. 1,

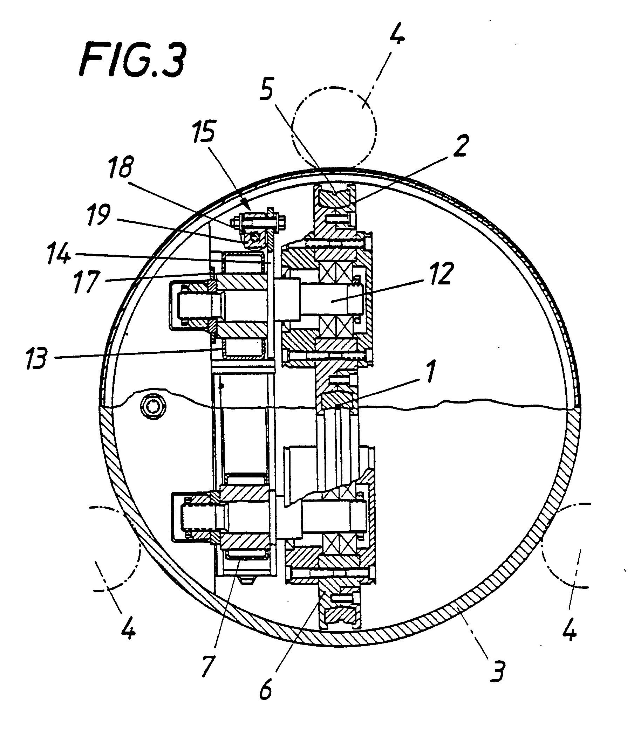

Fig. 3 die Seilabstützung in einem Querschnitt und
Fig. 4 die Steuerung des Vorschubantriebes und des Stelltriebes für die Nachstellung der Stützrollen in einem vereinfachten Blockschaltbild.

Das Sägeseil 1 einer aus Übersichtlichkeitsgründen nicht näher dargestellten Steinsäge wird beidseits einer Sägestrecke durch Stützrollen 2 gegen den Schnittdruck abgestützt. Zu diesem Zweck sind die Stützrollen 2 in einem Gehäuse 3 gelagert, das gemäß dem Ausführungsbeispiel über drei Laufrollen 4 um die Achse des Sägeseiles 1 drehbar gehalten ist und in Abhängigkeit von der jeweiligen Vorschubrichtung verdreht wird, so daß der vom Sägeseil 1 aufgenommene Schnittdruck von den Stützrollen 2 senkrecht zu ihren Drehachsen abgetragen werden kann. Aus diesem Grunde bleibt die Lagerung der Stützrollen 2 von axialen Kräften weitgehend frei. Wegen des Fehlens entsprechender Querkräfte wird außerdem die Seilführungsnut 5 der Stützrollen 2 in vorteilhafter Weise im wesentlichen radial beansprucht, was sich günstig auf die Standzeit auswirkt.

Neben den beiden Stützrollen 2 ist im Gehäuse 3 eine Andrückrolle 6 für das Sägeseil 1 vorgesehen, die zwischen den beiden Stützrollen 2 auf der ihnen bezüglich der Sägeseilachse gegenüberliegenden Seite angeordnet ist. Zur Lagerung dieser Andrückrolle 6 dient ein Schwenkhebel 7, der um eine zu den Drehachsen der Stützrollen 2 parallele Drehachse 8 im Gehäuse 3 gelagert ist und sich über eine Feder 9 abstützt, die im Ausführungsbeispiel als Gummifeder ausgebildet ist und mit Hilfe einer Einstellschraube 10 vorgespannt werden kann. Der mögliche Schwenkwinkel des Schwenkhebels 7 wird durch einen Anschlag 11 begrenzt, der durch eine Schraube gebildet wird, um eine Anschlagverstellung zu ermöglichen. Über die Feder 9 wird somit die Andrückrolle 6 gegen das Sägeseil 1 und dieses gegen die Stützrollen 2 gedrückt, so daß das Sägeseil 1 stets in die Seilführungsnuten 5 der Stützrollen 2 gepreßt wird. Damit wird eine sichere Seilführung gewährleistet, die das Durchgreifen von allfälligen Seilschwingungen auf die Sägestrecken 1a wirksam unterdrückt. Die beim Ausführungsbeispiel vorgesehene Gummifeder wirkt selbst schwingungsdämpfend und damit dem Auftreten von Seilschwingungen entgegen. Sollte die Dämpfung durch die Gummifeder 9 nicht ausreichen oder andere Federn Verwendung finden, kann man in die Abstützung einen gegebenenfalls mit der Feder 9 zu einer baulichen Einheit vereinigten Schwingungsdämpfer einbauen.

Mit dem Verschleiß der Seilführungsnuten 5 und des Sägeseiles 1 ist bei gehäusefest gelagerten Stützrollen 2 zwangsläufig eine Verlagerung der Sägeseilachse verbunden, was eine Beeinträchtigung der Schnittführung mit sich bringt. Um eine gleichbleibende geometrische Lage der Sägeseilachse in bezug auf die Drehachse des Gehäuses 3 zu ermöglichen, sind die Stützrollen 2 quer zu ihrer Achse und zur Sägeseilachse verstellbar angeordnet. Zu diesem Zweck sind die Stützrollen 2 nach dem Ausführungsbeispiel auf Exzenterachsen 12 gelagert, die in einem Träger 13 des Gehäuses 3 drehverstellbar gehalten sind. Zur gemeinsamen Verstellung der Exzenterachsen 12 weisen diese Kurbelarme 14 auf, die über eine Koppel 15 miteinander verbunden sind. Die Drehverstellung der Exzenterachsen 12 erfolgt mit Hilfe eines Stelltriebes 16, der im Gehäuse 3 angelenkt ist und an einem mit einer der Exzenterachsen 12 verbundenen Hebelarm 17 angreift. Die Koppel 15 zwischen den beiden Kurbelarmen 14 ist der Länge nach verstellbar ausgebildet, und zwar über eine Schraubenspindel 18, mit deren Hilfe eine Spindelmutter 19 verstellt werden kann, die mit einem der Kurbelarme 14 gelenkig verbunden ist. Durch eine Längenänderung der Koppel 15 wird eine Relativverdrehung der Kurbelarme 14 und damit eine ungleiche Anstellung der Stützrolle 2 bewirkt, wodurch unsymmetrische Verschleißverhältnisse einfach berücksichtigt werden können.

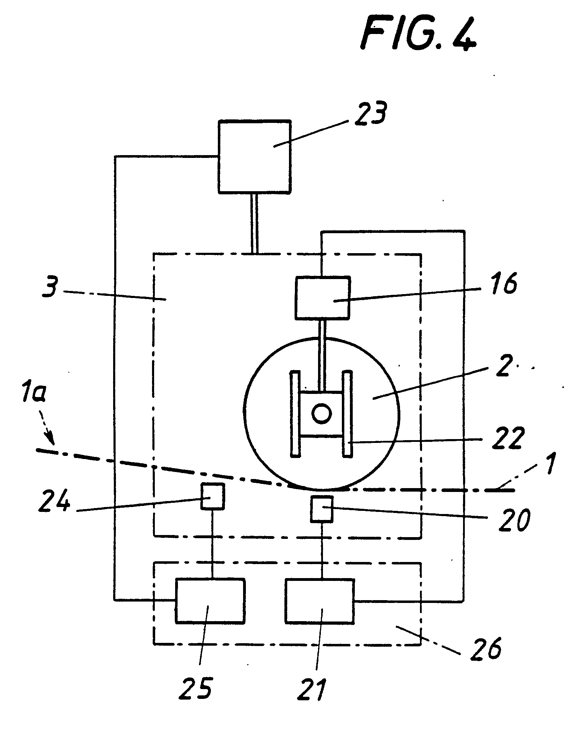

Um den Verschleiß der Stützrollen 2 erfassen zu können, ist auf der bezüglich der Sägeseilachse gegenüberliegenden Seite wenigstens einer Stützrolle 2 ein gehäusefester Abstandsgeber 20 für das Sägeseil 1 vorgesehen, der eine Steuereinrichtung 21 für den Stelltrieb 16 beaufschlagt. Wird zufolge einer Abstandsvergrößerung zwischen dem Abstandsgeber 20 und der Stützrolle 2 ein Verschleiß der Seilführungsnut 5 bzw. des Sägeseiles 1 festgestellt, so wird gemäß Fig. 4 über die Steuereinrichtung 21 der Stelltrieb 16 im Sinne einer Nachstellung der Stützrolle 2 beaufschlagt, bis das Sägeseil wieder seine vorbestimmte Lage koaxial zur Drehachse des Gehäuses 3 einnimmt. Im Blockschaltbild nach der Fig. 4 ist die Stützrolle 2 in einer Verschwebeführung 22 verstellbar gehalten.

Um bei der jeweils größtmöglichen Schnittleistung eine vorgegebene Schnittqualität auch bei sich ändernden Schnittbedingungen, beispielsweise auf Grund der Schnittführung oder örtlicher Unterschiede der Materialeigenschaften des Schnittgutes, einhalten zu können, wird der Vorschubantrieb 23 in Abhängigkeit von der jeweiligen Ablenkung des Sägeseiles 1 im Bereich der Sägestrecke 1a gesteuert. Zu diesem Zweck ist einer Stützrolle 2 ein Geber 24 für die ständige Erfassung der jeweiligen Ablenkung des Sägeseiles 1 in der achsnormalen Führungsebene der Stützrolle 2 sägestreckenseitig vorgelagert. Dieser Geber 24 besteht wie auch der Abstandsgeber 20 aus einer berührungslos arbeitenden, induktiven oder kapazitiven Abstandsmeßeinrichtung. Da auf Grund der über die Gehäusedrehung ermöglichten Ausrichtung der Stützrollen 2 jeweils nach der Vorschubrichtung das Sägeseil 1 nur in der durch die Seilführungsnut 5 der Stützrollen 2 bestimmten Ebene zufolge des Schnittdruckes abgelenkt werden kann, erlaubt die Messung des Abstandes des Sägeseiles 1 vom Geber 24 eine genaue Erfassung der Sägeseilablenkung. Die verschleißbedingte Verlagerung des Sägeseiles wird ja durch die Nachstellung der Stützrollen 2 ausgeglichen. Über eine an den Geber 24 angeschlossene Regeleinrichtung 25 kann somit der Vorschubantrieb 23 in Abhängigkeit von der jeweiligen Sägeseilablenkung gesteuert werden, so daß über die Vorschubsteuerung der Schnittdruck unabhängig von sich ändernden Schnittbedingungen konstant gehalten oder an den jeweiligen Schnittverlauf angepaßt werden kann.

Die Regeleinrichtung 25 und die Steuereinrichtung 21 können mit Hilfe eines Rechners 26 verwirklicht werden, wie dies in Fig. 4 angedeutet ist. In diesem Zusammenhang braucht wohl nicht erwähnt zu werden, daß über einen solchen Rechner 26 für einen bestimmten Kurvenverlauf unterschiedliche Schnittdrücke vorgegeben werden können, damit eine gleichbleibende Schnittqualität sichergestellt werden kann.

Da sich der Vorschub aus einer Relativbewegung des Schnittgutes quer zum Sägeseil ergibt, sind unter dem Vorschubantrieb 23 alle Antriebseinrichtungen zu verstehen, die diese Relativbewegung gewährleisten. So könnten beispielsweise für den Vorschubantrieb zwei Motoren einerseits für den Antrieb des Werkstückschlittens und anderseits für einen die Gehäuse 3 tragenden Rahmen oder bei feststehendem Werkstück ein Motor für einen Portalantrieb und ein Motor für den im Portal verschiebbaren Rahmen für die Gehäuse 3 vorgesehen werden.

## Patentansprüche

1. Steinsäge mit einem umlaufenden Sägeseil (1), das beidseits wenigstens einer Sägestrecke (1a) durch Stützrollen gegen den Schnittdruck abgestützt ist, mit einem Vorschubantrieb (23) und mit in Abhängigkeit von der jeweiligen Vorschubrichtung um die Sägeseilachse schwenkverstellbaren Gehäusen (3) für die Lagerung der Stützrollen (2), die quer zu ihrer Achse und zur Sägeseilachse verstellbar in den Gehäusen (3) gehalten sind, dadurch gekennzeichnet, daß die Stützrollen (2) mittels eines Stelltriebes (16) in Abhängigkeit vom radialen Verschleiß der Stützrollen (2) zur Sägeseilachse hin verlagerbar sind und daß wenigstens einer Stützrolle (2) ein gehäusefester Abstandsgeber (20) für das Sägeseil (1) zugeordnet ist, der eine Steuereinrichtung (21) für den Stelltrieb (16) zur Stützrollenverlagerung beaufschlagt.

2. Steinsäge nach Anspruch 1, dadurch gekennzeichnet, daß die Gehäuse (3) auf der den Stützrollen (2) bezüglich der Sägeseilachse gegenüberliegenden Seite federbelastete Andrückrollen (6) für das Sägeseil (1) aufweisen, die gegenüber den sägestreckenseitigen Stützrollen (2) von der Sägestrecke (1a) weg in Richtung der Sägeseilachse versetzt angeordnet sind.

3. Steinsäge nach Anspruch 1 oder 2, dadurch gekennzeichnet, daß zumindest ein Gehäuse (3) einen einer Stützrolle (2) sägestreckenseitig vorgelagerten Geber (24) für die ständige Erfassung der jeweiligen Seilablenkung trägt und daß der Vorschubantrieb (23) über eine mit dem Geber (24) verbundene Regeleinrichtung (25) kontinuierlich in Abhängigkeit vom Schnittverlauf einstellbar ist.

4. Steinsäge nach einem der Ansprüche 1 bis 3, dadurch gekennzeichnet, daß der gehäusefeste Abstandsgeber (20) für das Sägeseil (1) auf der bezüglich der Sägeseilachse gegenüberliegenden Seite der zugeordneten Stützrolle (2) vorgesehen ist.

5. Steinsäge nach einem der Ansprüche 1 bis 4, dadurch gekennzeichnet, daß die Stützrollen (2) auf verstellbaren Exzenterachsen (12) gelagert sind.

6. Steinsäge nach Anspruch 5, dadurch gekennzeichnet, daß der Stelltrieb (16) an einem mit der Exzenterachse (12) verbundenen Hebelarm (17) angreift.

7. Steinsäge nach Anspruch 5 oder 6, dadurch gekennzeichnet, daß die verstellbaren Exzenterachsen (12) zweier Stützrollen (2) eines Gehäuses (3) durch je einen Kurbelarm (14) und eine Koppel (15) zwischen den Kurbelarmen (14) antriebsverbunden sind.

8. Steinsäge nach Anspruch 7, dadurch gekennzeichnet, daß die Koppel (15) zwischen den beiden Kurbelarmen (14) längenverstellbar ausgebildet ist.

9. Steinsäge nach Anspruch 2, dadurch gekennzeichnet, daß die federbelasteten Andrückrollen (6) jeweils zwischen zwei Stützrollen (2) angeordnet sind.

10. Steinsäge nach Anspruch 2 oder 9, dadurch gekennzeichnet, daß die Andrückrollen (6) jeweils auf einem Schwenkhebel gelagert sind, der eine zu den Andrückrollen (6) parallele Drehachse (8) aufweist und durch eine Feder (9) gegenüber dem Gehäuse (3) abgestützt ist.

11. Steinsäge nach Anspruch 10, dadurch gekennzeichnet, daß die Feder (9) als Gummifeder ausgebildet ist.

12. Steinsäge nach Anspruch 10, dadurch gekennzeichnet, daß in die Abstützung zusätzlich zur Feder (9) ein Schwingungsdämpfer eingebaut ist.

## Claims

1. A stone saw comprising a revolving sawing rope (1), which is backed against the cutting pressure by backing rollers at both ends of at least one sawing portion (1a), also comprising a feed drive (23) and housings (3) in which the backing rollers are mounted and which are pivotally adjustable about the axis of the sawing rope in dependence on the instantaneous direction of the feed movement, characterized in that the backing rollers (2) are displaceable towards the axis of the sawing rope by an actuator (16) in dependence on the radial wear of the backing rollers (2) and a clearance sensor (20) for the sawing rope (1) is fixed to the housing and associated with at least one backing roller and controls a controller (21) for the actuator (16) for displacing the backing rollers.

2. A stone saw according to claim 1, characterized in that the housings (3) are provided on that side of the axis of the sawing rope which is opposite to the backing rollers (2) with spring-loaded pressure-applying rollers (6) for the sawing rope (1) and pressure-applying rollers are offset along the axis of the sawing rope away from the sawing portion (1a) from those backing rollers (2) which are near the sawing portion.

3. A stone saw according to claim 1 or 2, characterized in that at least one housing (3) carries a sensor (24), which is disposed between a backing rollar (2) and the sawing portion and serves to continuously detect the instantaneous deflection of the rope, and the feed drive (23) is continuously adjustable in dependence on the progress of the cutting operation by a feedback controller (25) which is connected to the sensor (24).

4. A stone saw according to any of the claims 1 to 3, characterized in that a clearance sensor (20) for the sawing rope (1) is fixed to the housing and disposed on that side of the associated backing roller (2) which is opposite to the axis of the sawing rope.

5. A stone saw according to any of claim 1 to 4, characterized in that the backing rollers (2) are mounted on adjustable eccentric axles (12).

6. A stone saw according to claim 5, characterized in that the actuator (16) acts on a lever arm (17), which is connected to the eccentric axle (12).

7. A stone saw according to claim 5 or 6, characterized in that the adjustable eccentric axles (12) of two backing rollers (2) mounted in a housing (3) are operatively interconnected by respective crank arms (14) and link (15) connecting said crank arms (14).

8. A stone saw according to claim 7, characterized in that the link (15) connecting the two crank arms (14) is adjustable in length.

9. A stone saw according to claim 2, characterized in that each spring-loaded pressure-applying roller (6) is disposed between two backing rollers (2).

10. A stone saw according to claim 2 or 9, characterized in that each of the pressure-applying rollers (6) is mounted on a pivoted lever, which has a pivot (8) that is parallel to the pressure-applying rollers (6), and said lever is supported on the housing (3) by a spring (9).

11. A stone saw according to claim 10, characterized in that the spring (9) consists of a rubber spring.

12. A stone saw according to claim 10, characterized in that the supporting means comprise a vibration damper in addition to the spring (9).

**Revendications**

1. Scie à pierre comprenant une corde de sciage (1) circulante qui est supportée contre la pression de sciage des deux côtés d'au moins un tronçon de sciage (1a) par des galets, comprenant une commande d'avance (23) et des boîtiers (3) pour le support des galets (2) pouvant être ajustés par pivotement autour de l'axe de la corde de sciage en fonction de la direction respective de l'avance, lesdits galets étant retenus dans les boîtiers (3) de façon à pouvoir être ajustés transversalement à leur axe et l'axe de la corde de sciage, caractérisé en ce que les galets (2) peuvent être déplacés au moyen d'un organe correcteur (16) en direction de l'axe de corde de sciage en fonction de l'usure radiale des galets (2) et en ce qu'au moins un indicateur de distance (20) pour la corde de sciage (1) est associé à au moins un galet (2) de façon fixe par rapport au boîtier, ledit indicateur de distance actionnant un moyen de commande (21) de l'organe correcteur (16) pour déplacer les galets.

2. Scie à pierre selon la revendication 1, caractérisée en ce que les boîtiers (3) sont pourvus de rouleaux de pression (6) chargés par ressort pour la corde de sciage sur le côté opposé aux galets (2) par rapport à l'axe de la corde de sciage, lesdits rouleaux de pression étant disposés par rapport aux galets (2) du tronçon de sciage de façon décalée du tronçon de sciage (1a) en direction de l'axe de la corde de sciage.

3. Scie à pierre selon la revendication 1 ou 2, caractérisée en ce qu'au moins un boîtier (3) porte un détecteur (24) précédant un galet (2) du côté de tronçon de sciage pour déterminer de façon continue la déviation respective de la corde et que la commande d'avance (23) peut être ajustée de façon permanente en fonction de l'allure de la coupe à l'aide d'un moyen de réglage (25) relié audit détecteur (24).

4. Scie à pierre selon l'une des revendications 1 à 3, caractérisée en ce que le détecteur de distance (20) fixe par rapport au boîtier pour la corde de sciage (1) est prévu sur le côté opposé du galet associé (2) par rapport à l'axe de la corde de sciage.

5. Scie à pierre selon l'une des revendications 1 à 4, caractérisée en ce que les galets (2) sont logés sur des axes excentriques (12) ajustables.

6. Scie à pierre selon la revendication 5, caractérisée en ce que l'organe correcteur (16) agit sur un levier (17) connecté à l'axe excentrique (12).

7. Scie à pierre selon la revendication 5 ou 6, caractérisée en ce que les axes excentriques (12) ajustables de deux galets (2) d'un boîtier (3) sont reliés pour entraînement par une manivelle (14) respective et une bielle (15) entre les manivelles (14).

8. Scie à pierre selon la revendication 7, caractérisée en ce que la bielle (15) entre les deux manivelles (14) est conçue pour être ajustable en longueur.

9. Scie à pierre selon la revendication 2, caractérisée en ce que les rouleaux de pression (6) chargés par ressort sont disposés entre deux galets (2) respectivement.

10. Scie à pierre selon la revendication 2 ou 9, caractérisée en ce que les rouleaux de pression (6) sont respectivement logés sur un levier pivotant ayant un axe de rotation (8) parallèle aux rouleaux de pression (6) et qui s'appuie sur le boîtier (3) par l'intermédiaire d'un ressort (9) .

11. Scie à pierre selon la revendication 10, caractérisée en ce que le ressort (9) est un ressort en caoutchouc.

12. Scie à pierre selon la revendication 10, caractérisée en ce qu'un amortisseur de vibration est monté additionnellement au ressort (9) dans le support.

# FIG.1

# FIG. 2

# FIG.3

# *FIG. 4*